Europäisches Patentamt

European Patent Office

Office européen des brevets

(19)

(11) Veröffentlichungsnummer: **0 352 528**
**A2**

(12) # EUROPÄISCHE PATENTANMELDUNG

(21) Anmeldenummer: **89112507.2**

(22) Anmeldetag: **08.07.89**

(51) Int. Cl.⁴: **C08G 18/78 , C08G 18/80 , C08G 18/76 , C08K 5/349 , //(C08G18/78,101:00), (C08G18/80,101:00)**

(30) Priorität: **23.07.88 DE 3825147**

(43) Veröffentlichungstag der Anmeldung:
**31.01.90 Patentblatt 90/05**

(84) Benannte Vertragsstaaten:
**AT BE DE ES FR GB IT NL SE**

(71) Anmelder: **BAYER AG**

**D-5090 Leverkusen 1 Bayerwerk(DE)**

(72) Erfinder: **Haas, Peter, Dr.**
**Zwengenberger Strasse 43**
**D-5657 Haan 1(DE)**
Erfinder: **Hettel, Hans, Dr.**
**Jaegerstrasse 20**
**D-5064 Roesrath-Forsbach(DE)**
Erfinder: **Jacobs, Gundolf, Dr.**
**Wickenpfaedchen 25**
**D-5060 Bergisch-Gladbach(DE)**

(54) **Verfahren zur Herstellung von Polyurethanschaumstoffen.**

(57) Polyurethanschaumstoffe werden durch Umsetzung von 1) durch Urethan-, Harnstoff-, Allophanat- und/oder Biuretgruppen modifizierten Toluylendiisocyanaten mit 2) mindestens zwei gegenüber Isocyanaten aktive Wasserstoffatome aufweisenden Polyetherpolyolen vom Molekulargewicht 400 bis 10 000 und mit einem Gehalt an primären OH-Gruppen von mindestens 50 Gew.-% (bezogen auf alle OH-Gruppen) in Gegenwart von 3) Wasser und/oder organischen Treibmitteln und 4) Katalysatoren und 5) Melamin als Flammschutzmittel und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln hergestellt.

EP 0 352 528 A2

## Verfahren zur Herstellung von Polyurethanschaumstoffen

Seit langem wird versucht, Polyurethanschaumstoffe flammwidrig einzustellen. Diese Problematik wird ständig bearbeitet, weil die Anforderungen bezüglich einer Entflammbarkeit laufend angehoben werden.

So fand in jüngster Zeit die britische Prüfnorm BS 5852, Part 2, z.B. in der Ausführungsform des Crib 5-Testes, besondere Beachtung.

Dies stellt an die Schaumstoffe besondere Ansprüche bezüglich ihrer Entzündungsresistenz. In jüngsterZeit wird versucht, in diesem Zusammenhang die Verwendung von Phosphorsäureestern als Flammschutzkomponente zu reduzieren. In diesem Zusammenhang wurde auch Melamin als Flammschutzmittel mehrfach erwähnt, wie z.B. in GB-PS 2 094 315, DE-OS 2 809 084, GB-PS 2 177 406, DE-OS 2 815 554 und DE-OS 35 30 519.

In der DE-OS 2 815 554 werden Polyisocyanate auf der Basis von Diphenylmethandiisocyanaten, spezielle Isocyanatmischungen hieraus und deren Modifizierungsprodukte als besonders flammwidrig in Verbindung mit Melamin hervorgehoben.

In Beispiel C, Seite 19 und 20 der DE-OS wird gezeigt, daß demgegenüber Isocyanate auf der Basis von Toluylendiisocyanat-Isomeren sehr schlechte Flammschutzeigenschaften zeigen.

Die DE-OS 35 30 519 beschreibt polymermodifizierte Polyetherpolyole und Melamin sowie Diisocyanate zur Herstellung flammwidriger Polyurethanschaumstoffe.

Zum Erreichen höherer Sauerstoffindices werden hier immer 100 Gew.-Teile Melamin verwendet. Beispiel 17 dieser DE-OS zeigt z.B., daß zum Bestehen verschiedener Flammschutznormen 100 Teile Melamin verwendet werden müssen.

Durch diese hohen Zusatzmengen an Melamin leiden Zugfestigkeit und Bruchdehnung; auch die Härte wird stark heraufgesetzt.

Überraschend wurde nun gefunden, daß durch Verwendung von modifizierten Isocyanaten auf der Basis von Toluylendiisocyanat, wie sie in der DOS 2 002 064 beschrieben sind, aktiven Polyetherpolyolen und Melamin sich ein hervorragender Flammschutz erreichen läßt. Schaumstoffe dieser Art bestehen z.B. die britische Norm BS 5852, Part 2, Ignition Source 5, glatt.

Gegenstand der vorliegenden Erfindung ist ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Polyetherpolyolen vom Molekulargewicht 400 bis 10 000 in Gegenwart von 3) Wasser und/oder organischen Treibmitteln und 4) Katalysatoren von 5) Flammschutzmitteln und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Polyisocyanat 1) durch Urethan-; Harnstoff-, Allophanat-und/oder Biuretgruppen modifizierte Toluylendiisocyanate,

Polyetherpolyole 2) solche mit einem Gehalt an primären OH-Gruppen von mindestens 50 Gew.-% (bezogen auf alle OH-Gruppen) und als

Flammschutzmittel 5) Melamin

verwendet werden.

Bevorzugte Ausführungsformen der Erfindung sind dadurch gekennzeichnet, daß

- als Isocyanate Allophanatgruppen enthaltende modifizierte Polyisocyanate auf der Basis von Toluylendiisocyanat und Glykolen verwendet werden,
- Melamin in Mengen von 10 bis 80 Gew.-Teilen, bevorzugt in Mengen von 15 bis 50 Gew.-Teilen, bezogen auf 100 Teile der Polyolkomponente 2), verwendet wird,
- weitere anorganische Flammschutzmittel mitverwendet werden,
- Melamin in Form seiner Salze eingesetzt wird und
- Abmischungen von Melamin mit Melaminsalzen verwendet werden.

Überraschenderweise wurde nämlich gefunden, daß bei der Verwendung der erfindungsgemäßen Rohstoffkombination aus modifizierten Isocyanaten auf der Basis von Toluylendiisocyanat, aktiven Polyetherpolyolen mit einem Molekulargewicht von 400 bis 10 000 und in der Regel 10 bis 80 Gew. -Teile Melamin, bevorzugt 15 bis 50 Gew.-Teilen, bezogen auf 100 Gew.-Teile der Polyolkomponente, Schaumstoffe mit überraschend guten Flammschutzeigenschaften erhalten werden.

Melamin kann als alleiniges Flammschutzmittel oder aber auch in Kombination mit weiteren, bevorzugt anorganischen, Flammschutzmitteln verwendet werden. Möglich sind auch Verbindungen, die Melamin als Base enthalten und in Form deren Salze mit starken Säuren zum Einsatz kommen, zum Beispiel als Oxalate oder Cyanurate.

Bei diesen Festkörperzusätzen an Melamin oder Melaminsalzen ist in der Regel eine große Körnung (50 - 150 μm) bevorzugt.

Erfindungsgemäße Ausgangskomponenten für die Herstellung von Polyurethanschaumstoffen sind

1. durch Urethan-, Harnstoff-, Allophanat- und/oder Biuretgruppen modifizierte Toluylendiisocyanate, z.B. solche auf Basis von 2,4- und/oder 2,6-Toluylendiisocyanat. Derartige Polyisocyanate sind an sich bekannt.

2. Ausgangskomponenten sind ferner mindestens zwei gegenüber Isocyanaten reaktionsfähige Wasserstoffatome aufweisende Polyether von einem Molekulargewicht von 400 - 10.000 und mit einem Gehalt an primären OH-Gruppen von mindestens 50 Gew.-% (bezogen auf alle OH-Gruppen), wie sie für die Herstellung von hochelastischen PUR-Schaumstoffen an sich bekannt sind.

Anteilig (bis zu 50 Gew.-%, bezogen auf Polyether) können auch mindestens zwei Hydroxylgruppen aufweisende Polyester, Polycarbonate, Polylactone und Polyamide vom Molekulargewicht 400-10.000 mitverwendet werden.

3. Als Treibmittel werden Wasser (bevorzugt) und/oder leicht flüchtige organische Substanzen verwendet.

4. Erfindungsgemäß werden die aus der Polyurethanchemie an sich bekannten Katalysatoren wie tert.-Amine und/oder metallorganische Verbindungen eingesetzt.

5. Als Flammschutzmittel wird Melamin entweder alleine oder als Abmischung mit Melaminsalzen, vorzugsweise unter Zusatz eines anorganischen Co-Flammschutzmittels, verwendet.

6. Ausgangskomponenten sind ferner gegebenenfalls Verbindungen mit mindestens zwei gegenüber Isocyanaten reaktionsfähigen Wasserstoffatomen und einem Molekulargewicht von 32 bis 399. Man versteht hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

7. Gegebenenfalls mitzuverwenden sind auch oberflächenaktive Zusatzstoffe, wie Emulgatoren und Schaumstabilisatoren. Als Emulgatoren sind solche auf Basis alkoxilierter Fettsäuren und höherer Alkohole bevorzugt.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilstoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966. z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden dort Anwendung, wo erhöhte Flammwidrigkeit für Polyurethanschaumstoffe erforderlich ist, wie sie z.B. gemäß dem Test BS 5852, Part 2, und den dort aufgeführten Entzündungsquellen gefordert werden.

Diese Schaumstoffe mit erheblich verbesserter Entzündungsresistenz werden zur Verarbeitung in Möbeln als Zuschnitt oder Formteil sowie zur Herstellung in Matratzen verwendet.

Ausführungsbeispiele

Unter den für die Herstellung von Polyetherpolyurethan/harnstoffschaumstoffen üblichen Bedingungen werden zur Reaktion gebracht (alle Teile sind Gew.-Teile):

| Beispiel 1 | |
|---|---|
| 100 Tle. | Polyether mit ca. 50 % an prim. OH-Gruppen, (OH-Zahl 28) auf Basis von Trimethylolpropan/Propylenoxid/Ethylenoxid |
| 50 Tle. | Melamin (Korngröße 90 % max. 50 μm) |
| 3,3 Tle. | Wasser (gesamt) |
| 5,0 Tle. | Diisopropanolamin,Wassergehalt 20 Gew.-%, |
| 1,0 Tle. | Zellöffner*1, Wassergehalt 20 Gew.-%, |
| 0,2 Tle. | Stabilisator auf Basis eines kurzkettig polyethermodifizierten Silicons |
| 3,0 Tle. | Glycerin |
| 0,1 Tle. | Zinnhexoat |
| 2,0 Tle. | Tris-(2-chlorethyl)-phosphat |
| 66,4 Tle. | allophanatisiertes Toluylendiisocyanat, |
| | NCO-Gehalt: 40,5 % Kennzahl 103 Steigzeit 130 sec. Rohdichte: 47,1 kg/m³ Stauchhärte: 6,2 kPa |

*1) gemäß Beispiel 2 der DE-OS3 124 885
Prüfung der Flammwidrigkeit nach BS 5852, Part 2, Crib 5:
Überzug: PE-Textil der Firma Lister (GB) 220 g/m²
Brandzeit 156 sec.
Masseverlust 32 g
IS 5-Test bestanden.

5

| Beispiel 2 | |
|---|---|
| 100 Tle. | Polyether gemäß Beispiel 1 |
| 30 Tle. | Melamin (Korngröße 90 % max. 50 $\mu$m) |
| 3,3 Tle. | Wasser (gesamt) |
| 5,0 Tle. | Diisopropanolamin (Wassergehalt 20 Gew.-%) |
| 1,0 Tle. | Zellöffner gemäß Beispiel 1 |
| 0,2 Tle. | Stabilisator gemäß Beispiel 1 |
| 3,0 Tle. | Glycerin |
| 0,1 Tle. | Zinnhexoat |
| 66,4 Tle. | Isocyanat gemäß Beispiel 1 |
| | Kennzahl 103 |
| | Steigzeit 130 sec |

Rohdichte: 43,1 kg/cm³

Stauchhärte: 5,1 kPa

Prüfung der Flammwidrigkeit nach BS 5852, Part 2, Crib 5:
Überzug: PE-Textil der Firma Lister (GB) 220 g/m²

Brandzeit: 170 sec

Masseverlust 29 g

IS 5-Test bestanden.

| Beispiel 3 | |
|---|---|
| 100 Tle. | Polyether gemäß Beispiel 1 |
| 50 Tle. | Melamin Korngrößenschwerpunkt 150 $\mu$m |
| 3,3 Tle. | Wasser (gesamt) |
| 5,0 Tle. | Diisopropanolamin, Wassergehalt 20 Gew.-%, |
| 1,0 Tle. | Zellöffner gemäß Beispiel 1 |
| 0,2 Tle. | Stabilisator gemäß Beispiel 1 |
| 3,0 Tle. | Glycerin |
| 0,1 Tle. | Zinnhexoat |
| 2,0 Tle. | Tris-(2-chlorethyl)-phosphat |
| 66,4 Tle. | Isocyanat gemäß Beispiel 1 |
| | Kennzahl: 103 |
| | Steigzeit: 130 sec |
| | Rohdichte: 47,2 kg/m³ |
| | Stauchhärte: 5,5 kPa |

Prüfung der Flammwidrigkeit nach BS 5852, Part 2, Crib
5: Überzug: PE-Textil der Firma Lister (GB) 220 g/m²

Brandzeit: 160 sec

Masseverlust: 22 g

Kratertiefe 5,5 cm ohne Schmelzdurchbruch

IS 5-Test bestanden.

| Beispiel 4 | |
|---|---|
| 100 Tle. | Polyether gemäß Beispiel 1 |
| 30 Tle. | Melamin, Körnungsschwerpunkt 150 μm |
| 3,3 Tle. | Wasser (gesamt) |
| 5,0 Tle. | Diisopropanolamin, Wassergehalt 20 Gew.-%, |
| 0,2 Tle. | Stabilisator gemäß Beispiel 1 |
| 3,0 Tle. | Glycerin |
| 0,1 Tle. | Zinnhexoat |
| 2,0 Tle. | Tris-(2-chlorethyl)-phosphat |
| 1,0 Tle. | Zellöffner gemäß Beispiel 1 |
| 66,4 Tle. | Isocyanat gemäß Beispiel 1 |
| | Kennzahl 103 |
| | Steigzeit: 190 sec. |
| Rohdichte: 35,0 kg/m$^3$ | |
| Stauchhärte: 3,5 kPa | |
| Prüfung der Flammwidrigkeit nach BS 5852, Part 2, Crib 5: Überzug: PE-Textil der Firma Lister (GB) 220 g/m$^2$ | |
| Brandzeit: 170 sec. | |
| Masseverlust: 27 g | |

**Ansprüche**

1. Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Polyetherpolyolen vom Molekulargewicht 400 bis 10 000 in Gegenwart von 3) Wasser und/oder organischen Treibmitteln und 4) Katalysatoren und 5) Flammschutzmitteln und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als

Polyisocyanate 1) durch Urethan-, Harnstoff-, Allophanat- und/oder Biuretgruppen modifizierte Toluylendiisocyanate,

Polyetherpolyole 2) solche mit einem Gehalt an primären OH-Gruppen von mindestens 50 Gew.-% (bezogen auf alle OH-Gruppen) und als

Flammschutzmittel 5) Melamin verwendet werden.

2. Verfahren nach Anspruch 1, dadurch gekennzeichnet, daß als Polyisocyanate Allophanatgruppen enthaltende modifizierte Polyisocyanate auf der Basis von Toluylendiisocyanat und Glykolen verwendet werden.

3. Verfahren nach Anspruch 1 und 2, dadurch gekennzeichnet, daß Melamin in Mengen von 10 bis 80 Gew.-Teilen, bevorzugt in Mengen von 15 bis 50 Teilen, bezogen auf 100 Teile der Polyolkomponente 2), verwendet wird.

4. Verfahren nach Anspruch 1 bis 3, dadurch gekennzeichnet, daß weitere anorganische Flammschutzmittel mitverwendet werden.

5. Verfahren nach Anspruch 1 bis 4, dadurch gekennzeichnet, daß Melamin in Form seiner Salze eingesetzt wird.

6. Verfahren nach Anspruch 1 bis 4, dadurch gekennzeichnet, daß Mischungen von Melamin mit Melaminsalzen eingesetzt werden.

7